# EUROPÄISCHE PATENTSCHRIFT

(11) **EP 3 500 771 B1**
(45) Veröffentlichungstag und Bekanntmachung des Hinweises auf die Patenterteilung: **02.11.2022**
(21) Anmeldenummer: 17732816.8
(22) Anmeldetag: 12.06.2017
(51) Int. Cl.: F16F 9/04, B29D 22/02, C08L 21/00

(54) **KAUTSCHUKMISCHUNG UND ELASTOMERER ARTIKEL MIT FLAMMHEMMENDEN EIGENSCHAFTEN**
RUBBER MIXTURE AND ELASTOMERIC ARTICLE HAVING FLAME-RETARDANT PROPERTIES
MÉLANGE DE CAOUTCHOUC ET ARTICLE ÉLASTOMÈRE PRÉSENTANT DES PROPRIÉTÉS IGNIFUGES

(30) Priorität: 17.08.2016 DE 102016215342
(43) Veröffentlichungstag der Anmeldung: 26.06.2019
(73) Patentinhaber: ContiTech Elastomer-Beschichtungen GmbH, 30165 Hannover (DE)
(72) Erfinder: PASSON-WESSELOH, Barbara, 37073 Göttingen (DE); ROTHER, Gabriele, 37079 Göttingen (DE); HAAKE, Anne, 30159 Hannover (DE); LÖSCHNER, Jens, 37120 Bovenden (DE); STORRE, Jens, 37176 Nörten-Hardenberg (DE)
(74) Vertreter: Continental Corporation
(86) Internationale Anmeldenummer: PCT/EP2017/064268
(87) Internationale Veröffentlichungsnummer: WO 2018/033266

(56) Entgegenhaltungen:
- EP-A1- 2 805 812
- JP-A- H09 104 859
- JP-A- H09 132 677
- JP-A- H10 139 828
- JP-A- 2003 160 695
- JP-A- 2004 314 838

## Beschreibung

Die Erfindung betrifft eine Kautschukmischung, die gute Flammschutzeigenschaften aufweist, und einen elastomeren Artikel, der die Kautschukmischung enthält.

Elastomere Artikel sind insbesondere mehrschichtige Stoffbahnen zur Bildung von flexiblen Behältern, Zelten, Planen, Membranen, Schutzanzügen, Drucktüchern, Faltenbälgen und dergleichen. Diese Stoffbahnen weisen wenigstens eine Festigkeitsträgerschicht in Form einer Gewebeschicht auf, die in Gummi eingebettet ist. Man nennt diese Stoffbahnen daher auch gummierte Gewebe.

Elastomere Artikel können aber auch Luftfedern, Gummi-Feder-Elemente, Antriebsriemen, Transportbänder, Fördergurte, Schläuche, Reifen, Dichtungsmaterialien auf der Basis von Silkonkautschuk, wie bspw. in EP 2842992 A1 beschrieben, oder auf der Basis von chlorsulfoniertem Polyethylen sein.

Diese elastomeren Artikel müssen in der Regel bestimmten Anforderungen hinsichtlich Flamm- und Brandschutz genügen, insbesondere seit Kurzem den erhöhten Rauchgasdichte- und Rauchgastoxizität-Grenzwerten der geänderten Norm EN 45545 einhalten. Bisher war unter anderem bekannt, Antimontrioxid als Flammschutzmittel einzusetzen. Antimontrioxid wirkt als Synergist in Kombination mit halogenhaltigen Flammschutzmitteln, siehe bspw. DE2729838C2 für Profildichtungen. Halogenierte Flammschutzmittel haben den Nachteil, dass bei der Verbrennung polyhalogenierte Verbindungen entstehen. Diese wirken toxisch, sind biologisch schlecht abbaubar und reichern sich in der Nahrungsektte an. Antimontrioxid wird als möglicherweise krebserzeugende Substanz für den Menschen eingestuft, so dass beide Flammschutzmittel möglichst reduziert und / oder gänzlich gemieden werden sollten.

Alternativ ist aus EP 2196492 B1, insbesondere für Luftfedern, bekannt, eine Brandschutzbeschichtung aus Blähgraphit einzusetzen. Diese Brandschutzbeschichtung muss allerdings in einem separaten Verfahrensschritt auf das Endprodukt aufgebracht werden und es besteht immer die Gefahr, dass sich diese Beschichtung vom Endprodukt bei starker oder auch schon bei normaler Belastung ablöst.

EP 2 805 812 B1 offenbart die Präambel des Anspruchs 1.

Aufgabe der Erfindung ist es nun, eine Kautschukmischung bereitzustellen, die vergleichbare oder sogar verbesserte Flammschutzeigenschaft aufweist, wie die aus dem Stand der Technik bekannten Kautschukmischungen. Gleichzeitig soll ein elastomerer Artikel bereitgestellt werden, der vergleichbare oder sogar verbesserte Flammschutzeigenschaften aufweist wie elastomere Artikel, welche aus dem Stand der Technik bekannte Flammschutzmittel enthalten.

Die erhöhten Anforderungen hinsichtlich der Rauchgasdichte- und Rauchgastoxizität-Grenzwerte der geänderten Norm EN 45545 sollen ohne Zugabe von halogenhalteigen Flammschutzmitteln erfüllt werden. Gleichzeitig sollen während der Herstellung des elastomeren Artikel kein erhöhter Aufwand und auch keine gesundheitliche Gefahren bestehen.

Der erste Teil der Aufgabe wird dadurch gelöst, dass die Kautschukmischung frei von halogenhaltigen Flammschutzmitteln ist und Hydrotalcit und Sepiolith enthält.

Die zweite Aufgabe wird dadurch gelöst, dass der elastomere Artikel wenigstens eine Kautschukmischung enthält, welche frei von halogenhaltigen Flammschutzmitteln ist und welche Hydrotalcit und Sepiolith enthält.

Überraschenderweise hat sich gezeigt, dass der Einsatz von Hydrotalcit und Sepiolith in Kautschukmischungen und in die Kautschukmischung enthaltenden elastomeren Artikeln eine ausreichende, insbesondere in Verbindung mit chlorsulfoniertem Polyethylen (CSM) und / oder alkyliertem chlorsulfonierten Polyethylen (ACSM) eine verbesserte Flammschutzwirkung, zeigt.

Da die Kautschukmischung hierbei frei von halogenhaltigen Flammschutzmittel ist, lässt sich der Anteil an Halogenen und / oder Halogenverbindungen deutlich reduzieren oder zum Teil ganz eliminieren.

Hydrotalcit wird oft auch als Hydrotalkit, früher auch als Völknerit, bezeichnet. Es hat die chemische Zusammensetzung Mg₆Al₂[(OH)₁₆|CO₃]·4H₂O. Hydrotalcit besitzt die Fähigkeit, durch graduelle Abgabe von Aluminiumhydroxid Säuren zu binden und findet deshalb vor allem vielfältigen Einsatz als Arzneimittel.

Sepiolith ist allgemein auch als Meerschaum bekannt. Es handelt sich um ein Magnesiumsilikat mit der chemischen Zusammensetzung Mg₈[(OH)₂|Si₆O₁₅]₂·(4+8)H₂O. In der Gesamtkautschukmischung beträgt die Menge an Hydrotalcit bevorzugt 5 bis 20 phr, besonders bevorzugt in Mengen von 5 bis 16 phr. Der Sepiolith wird in der Gesamtkautschukmischung bevorzugt in Mengen von 4 bis 20 phr, besonders bevorzugt in Mengen von 4 bis 15 phr verwendet.

In einer bevorzugten Ausführungsform ist die Kautschukmischung frei von weiteren Flammschutzmitteln.

Es ist aber auch möglich, neben Hydrotalcit und Sepiolith noch wenigstens ein weiteres Flammschutzmittel zu verwenden. In diesem Fall beträgt die Gesamtmenge an Hydrotalcit und Sepiolith bezogen auf die Gesamtmenge an Flammschutzmitteln wenigstens 17 Gew.-%.

Hierbei können alle der fachkundigen Person bekannten halogenfreien Flammschutzmittel alleine oder in Kombination verwendet werden.

Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage. Auch geringe Mengen von Antimontrioxid sind denkbar.

Die Kautschukmischung enthält wenigstens eine Kautschukkomponente, die bevorzugt ausgewählt ist aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder alkyliertes chlorsulfoniertes Polyethylen (ACSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Poyurethan (PU).

Die genannten Kautschuke können hierbei alleine oder im Verschnitt eingesetzt werden. Besonders bevorzugt ist die Verwendung von Chlorsulfoniertem Polyethylen (CSM) und / oder alkyliertem chlorsulfoniertem Polyethylen (ACSM) jeweils alleine oder in Kombination. Enthält die Kautschukmischung CSM und / oder ACSM als Hautptkautschukkomponente, d.h. mehr als 50 phr, so zeigen sich die Vorteile von Sepiolith und Hydrotalcit hinsichtlich der flammhemmenden Eigenschaften besonders gut. Bevorzugt werden Mengen von CSM und / oder ACSM von 80 bis 100 phr, ganz besonders bevorzugt Mengen von CSM und / oder ACSM von 90 bis 100 phr.

CSM besitzt ausgewogene Eigenschaften im Hinblick auf Chemikalienbeständigkeit, Öl-und Kraftstoffbeständigkeit sowie Hitze- und Bewitterungsbeständigkeit. CSM-Kautschuk ist gut geeignet für die Herstellung heller und farbiger Kautschukmischungen und lässt sich gut verarbeiten. ACSM bietet insbesondere ein verbessertes Tieftemperaturverhalten und ein gutes dynamisches Verhalten.

Die Zugabe von BR, bevorzugt in Mengen von 0,1 bis 10 phr, führt zusätzlich zu einem verbesserten Verarbeitungsverhalten der Mischung.

Des Weiteren enthält die Kautschukmischung übliche Mischungsingredienzien, wie z. Bsp. wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Der elastomere Artikel kann gegebenenfalls noch wenigstens einen Festigkeitsträger enthalten. Dieser Festigkeitsträger liegt zumeist als einlagige oder mehrlagige Festigkeitsträgerschicht vor und kann je nach Endprodukt als Filz, Vlies, Gewebe, Geflecht, Gewirk oder Gestrick, Gelege ausgebildet sein. Es ist auch möglich, dass die Festigkeitsträgerschicht aus Komponenten aus Filz, Vlies, Gewebe, Geflecht, Gewirk oder Gestrick, Gelege ausgebildet ist.

Als Materialien für die Festigkeitsträgerschicht können alle der fachkundigen bekannten und geeigneten Materialien verwendet werden, die bevorzugt ausgewählt sind aus der Gruppe, bestehend aus: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyketon (POK) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas und / oder Basalt und / oder Metall und / oder Carbon und / oder Keramik und / oder Kohlenstoff und / oder Wolle und / oder Baumwolle und / oder Polypropylen und / oder Melamin und / oder modifizierte Viskose und / oder Gestein und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für die Festigkeitsträgerschicht können hierbei alleine oder in Kombination verwendet werden, d.h. es sind auch so genannte Hybridsysteme möglich. Als Hybridsysteme sind z. B. Kombinationen aus Polyester (PES) oder Polyamid (PA) mit Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas besonders gut geeignet.

Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas zeichnen sich durch eine hohe Temperaturbeständigkeit (und Chemikalienbeständigkeit) aus und verbessern dadurch die Brandeigenschaften des Gewebes. Die Kombination mit Polyester (PES) oder Polyamid (PA) macht das Hybridsysteme kostengünstig und reduziert negative Eigenschaften wie z. B. die reduzierte Reißdehnung der hochtemperaturbeständigen Fasern.

Die Erfindung soll nun anhand von Vergleichs- und Ausführungsbeispielen, die in der Tabelle 1a, 1b und 1c zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

In Tabelle 1a ist dabei die Mischungszusammensetzung dargestellt, während in Tabelle 1b die dazugehörigen entsprechenden physikalischen Eigenschaften illustriert sind. Tabelle 1c zeigt einen Brandschutzversuch am beschichteten Gewebe auf.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| **Bestandteile** | **Einheit** | **V1** | **E1** |
|---|---|---|---|
| BR | phr | 5 | 6 |
| CSM | phr | 85 | 94 |
| Polyethylen (chloriert) | phr | 10 | 0 |
| Füllstoffe | phr | 110 | 140 |
| Hilfsmittel | phr | 4,5 | 5 |
| Vulkanisationssystem | phr | 4,5 | 5 |
| Hydrotalcit | phr | 0 | 10 |
| Sepiolith | phr | 0 | 10 |
| Weichmacher | phr | 10 | 20 |

**Tabelle 1b**

| | **Einheit** | **V1** | **E1** |
|---|---|---|---|
| Dichte DIN EN ISO 1183-1 | g/cm³ | 1,60 | 1,64 |
| Mooney-Viskosität ML1+4, ASTM D1646 | MU | 79 | 84 |
| Härte DIN 53505 | Shore A | 64 | 73 |
| Zugfestigkeit DIN 53504 S3A | N/mm² | 10,7 | 10,8 |
| Bruchdehnung DIN 53504 S3A | % | 565 | 378 |
| Spannungswert 300% DIN 53504 S3A | N/mm² | 2,2 | 8,8 |
| Weiterreißwiderstand längs in Anlehnung an DIN ISO 34-1 | N/mm | 10,9 | 14,0 |
| Weiterreißwiderstand quer in Anlehnung an DIN ISO 34-1 | N/mm | 11,8 | 13,2 |
| Abrieb in Anlehnung an DIN ISO 4649-A | mm³ | 216 | 194 |
| Sauerstoffindex LOI DIN 22117 | % | 35,0 | 48,8 |

Aus der Tabelle 1b ist zu erkennen, dass mir einer Mischung gemäß E1 trotz der niedrigeren Bruchdehnungswerte insgesamt ein höheres physikalisches Niveau erzielt wird. Des Weiteren ist eine Verbesserung des Sauerstoffindex (=Maß für den Flammschutz) um ca. 40% zu erkennen.

**Tabelle 1c**

| | **beschichtetets Gewebe mit V1** | **beschichtetets Gewebe mit E1** | **Anforderung R7 HL 2** |
|---|---|---|---|
| Rauchgasdichte Dₛmax EN ISO 5659-2 | 777 | 569 | < 600 |

Der Vergleich eines mit einer Kautschukmischung gemäß V1 beschichteten Gewebes mit einem gemäß E1 beschichteten Gewebe zeigt ebenso ein verbessertes Flammschutzverhalten, wie sich an den Werten für die Rauchgasdichte zeigt.

Zudem erfüllt das mit einer Kautschukmischung gemäß E1 beschichtete Gewebe auch alle weiteren Anforderungen für die Klassifizierung nach Anforderungssatz R7 HL2 der EN 45545.

## Patentansprüche

1. Kautschukmischung, die frei von halogenhaltigen Flammschutzmitteln ist und mehr als 50 phr Chlorsulfoniertes Polyethylen (CSM) und / oder alkyliertes chlorsulfonierte Polyethylen (ACSM) jeweils alleine oder in Kombination enthält, und **dadurch gekennzeichnet, dass** die Kautschukmischung zusätzlich Hydrotalcit und Sepiolith enthält.

2. Kautschukmischung nach Anspruch 1, **dadurch gekennzeichnet, dass** die Kautschukmischung wenigstens ein weiteres Flammschutzmittel enthält.

3. Kautschukmischung nach Anspruch 1, **dadurch gekennzeichnet, dass** die Kautschukmischung Hydrotalcit und Sepiolith als einzige Flammschutzmittel enthält.

4. Kautschukmischung nach einem der Ansprüche 1 bis 3, **dadurch gekennzeichnet, dass** das Hydrotalcit in Mengen von 5 bis 20 phr in der Kautschukmischung vorhanden ist.

5. Kautschukmischung nach einem der Ansprüche 1 bis 4, **dadurch gekennzeichnet, dass** der Sepiolith in Mengen von 4 bis 15 phr in der Kautschukmischung vorhanden ist.

6. Elastomerer Artikel, **dadurch gekennzeichnet, dass** er wenigstens eine Kautschukmischung nach einem der Ansprüche 1 bis 5 enthält.

7. Elastomerer Artikel nach Anspruch 6, **dadurch gekennzeichnet, dass** er wenigstens einen Festigkeitsträger enthält.

8. Elastomerer Artikel nach einem der Ansprüche 6 oder 7, **dadurch gekennzeichnet, dass** der elastomere Artikel ein flexibler Behälter, ein Zelt, eine Plane, eine Membran, ein Schutzanzug, ein Drucktuch, ein Faltenbalg, eine Luftfeder, ein Gummi-FederElement, ein Antriebsriemen, ein Transportband, ein Fördergurt, ein Schlauch, ein Reifen oder ein Dichtungsmaterial auf der Basis von Silikonkautschuk oder ein Dichtungsmaterial auf Basis von chlorsulfoniertem Polyethylen ist.

## Claims

1. Rubber mixture free from halogen-containing flame retardants and containing more than 50 phr of chlorosulfonated polyethylene (CSM) and/or alkylated chlorosulfonated polyethylene (ACSM) in each case alone or in combination and **characterized in that** the rubber mixture additionally contains hydrotalcite and sepiolite.

2. Rubber mixture according to Claim 1, **characterized in that** the rubber mixture contains at least one further flame retardant.

3. Rubber mixture according to Claim 1, **characterized in that** the rubber mixture contains hydrotalcite and sepiolite as sole flame retardants.

4. Rubber mixture according to any of Claims 1 to 3, **characterized in that** the hydrotalcite is present in the rubber mixture in amounts of 5 to 20 phr.

5. Rubber mixture according to any of Claims 1 to 4, **characterized in that** the sepiolite is present in the rubber mixture in amounts of 4 to 15 phr.

6. Elastomeric article, **characterized in that** it contains at least one rubber mixture according to any of Claims 1 to 5.

7. Elastomeric article according to Claim 6, **characterized in that** it contains at least one strength member.

8. Elastomeric article according to either of Claims 6 or 7, **characterized in that** the elastomeric article is a flexible container, a tent, a tarpaulin, a membrane, a protective suit, a printing blanket, a bellows, an air spring, a rubber suspension element, a drive belt, a transport belt, a conveyor belt, a hose, a tyre or a sealing material based on silicone rubber or a sealing material based on chlorosulfonated polyethylene.

## Revendications

1. Mélange de caoutchouc qui est exempt d'agents ignifuges halogénés et contient plus de 50 phr de polyéthylène chlorosulfoné (CSM) et/ou de polyéthylène chlorosulfoné alkylé (ACSM) à chaque fois seul ou en combinaison, et **caractérisé en ce que** le mélange de caoutchouc contient de plus de l'hydrotalcite et de la sépiolite.

2. Mélange de caoutchouc selon la revendication 1, **caractérisé en ce que** le mélange de caoutchouc contient au moins un agent ignifuge supplémentaire.

3. Mélange de caoutchouc selon la revendication 1, **caractérisé en ce que** le mélange de caoutchouc contient de l'hydrotalcite et de la sépiolite comme seul agent ignifuge.

4. Mélange de caoutchouc selon l'une quelconque des revendications 1 à 3, **caractérisé en ce que** l'hydrotalcite est présente en des quantités de 5 à 20 phr dans le mélange de caoutchouc.

5. Mélange de caoutchouc selon l'une quelconque des revendications 1 à 4, **caractérisé en ce que** la sépiolite est présente en des quantités de 4 à 15 phr dans le mélange de caoutchouc.

6. Article élastomérique, **caractérisé en ce qu'il** contient au moins un mélange de caoutchouc selon l'une quelconque des revendications 1 à 5.

7. Article élastomérique selon la revendication 6, **caractérisé en ce qu'il** contient au moins un support de renforcement.

8. Article élastomérique selon l'une quelconque des revendications 6 et 7, **caractérisé en ce que** l'article élastomérique est un récipient flexible, une tente, une bâche, une membrane, un vêtement de protection, un blanchet de pression, un soufflet, un ressort pneumatique, un élément de ressort en caoutchouc, une courroie d'entraînement, une bande transporteuse, une courroie de transport, un tuyau, un pneu ou un matériau d'étanchéité à base de caoutchouc de silicone ou un matériau d'étanchéité à base de polyéthylène chlorosulfoné.
